# EUROPEAN PATENT SPECIFICATION

(11) **EP 3 324 747 B1**
(45) Date of publication and mention of the grant of the patent: **21.08.2019**
(21) Application number: 16741911.8
(22) Date of filing: 19.07.2016
(51) Int. Cl.: A23G 1/56, A23G 1/00

(54) **SOLUBLE AGGLOMERATED CHOCOLATE POWDER**
LÖSLICHES AGGLOMERIERTES SCHOKOLADENPULVER
POUDRE DE CHOCOLAT AGGLOMÉRÉE SOLUBLE

(30) Priority: 21.07.2015 EP 15177782
(43) Date of publication of application: 30.05.2018
(73) Proprietor: Société des Produits Nestlé S.A., 1800 Vevey (CH)
(72) Inventor: CHAVEZ MONTES, Bruno, 1012 Lausanne (CH); WOOSTER, Timothy James, 1066 Epalinges (CH); JACCARD, Dominique, 1350 Orbe (CH); LEFAIT, Hugues, 17600 Médis (FR)
(74) Representative: Cogniat, Eric Jean Marie
(86) International application number: PCT/EP2016/067111
(87) International publication number: WO 2017/013084

(56) References cited:
- JP-A- H0 787 893
- JP-A- S58 155 045
- US-A- 4 346 121
- US-A1- 2008 075 805
- KOWALSKA J ET AL: "The influence of ingredients distribution on properties of agglomerated cocoa products", JOURNAL OF FOOD ENGINEERING, BARKING, ESSEX, GB, vol. 68, no. 2, May 2005 (2005-05), pages 155-161, XP027609490, ISSN: 0260-8774 [retrieved on 2005-05-01]

## Description

### Field of the invention

The present invention relates to soluble chocolate powders for use in the preparation of beverages and presenting good dissolution in cold diluent.

### Background of the invention

Soluble chocolate powders are currently used for preparing chocolate beverages by mixing water or milk with these powders.

However, the existing beverage dispenser devices which make use of the above outlined principle suffer the inconvenience that the beverage soluble powder is not always fully dissolved, particularly when a cold beverage is prepared by dissolving the powder with a cold diluent, either cold water or cold milk. Thus, residua of the undispersed or undissolved powder are present in the prepared beverage ; this leads to a non-uniform and thus to a non-inviting appearance of the prepared beverage. Besides, since the whole dose of soluble powder is not totally dissolved, the final beverage does not present the expected taste ; actually there exists a fine tuning between the diluent volume and the powder quantity to get the best final beverage. If the dissolution is not efficient, the final beverage won't reach the expected taste. Undissolved material can also lead to a feeling of sandiness in the mouth and/or result in leftovers at the bottom of the cup when the drink is finished, with the consequent negative impact on the consumer.

Solutions have been proposed to add additives in the beverage soluble powders compositions to improve their dissolution but these additives may have an impact on the beverages taste or increase the costs of production of the existing powders. For example, WO 2007/088195 proposed to add flowing agents to food powders in order to improve their cold dissolution characteristics.

US2008/075805 describes a method wherein an aqueous solution of lecithin is used as an agglomerating solution to make granulated chocolate powder that is soluble in cold diluent. EP 740 904 describes a method to improve the wettability of agglomerated cocoa and sugar containing powders which consists in exposing the powders to electromagnetic radiation. Yet, improving the wettability is not sufficient to get a good dissolution of the powders at the moment of preparation of the beverages.

In WO 2011/042356 it has been proposed to improve solubility in cold water by heating the powder just before its dissolution. But such a process can only be implemented in a beverage preparation machine specifically designed for.

It is also known that sugar boosts the dissolution of chocolate mixes. For example WO 2012/095121 proposes coating a cocoa powder or a cocoa cake with a hydrophilic agent like sugar. Yet such a solution increases the ratio of sugar in the beverage powder. It can affect the original taste of the cocoa and it increases the rate of sugar taken by the consumer unnecessary.

There is need for improving the solubility of soluble chocolate beverage powders when they are dissolved with a cold diluent.

It would be advantageous to shorten the dissolution time of soluble chocolate beverage powders and the reconstitution time of the beverages.

It would be advantageous to improve the solubility of soluble chocolate beverage powders without using additive components in important ratios.

It would be advantageous to improve solubility of soluble chocolate beverage powders while keeping good flowability for these powders, essentially to enable a consistent dosing of the powder when used in a beverage machine dispenser.

### Description of the invention

In a first aspect of the invention, there is provided a method for producing a soluble agglomerated chocolate powder, said powder comprising cocoa fat and chocolate powder ingredients including at least a sweetener and/or a white component powder comprising protein, said process comprising the steps of :
- providing an aqueous emulsion of cocoa fat,
- loading a fluid bed agglomerator with chocolate powder solid ingredients,
- spraying the emulsion of cocoa fat into the fluid bed agglomerator to form agglomerates. The method of the present invention is a fluid bed agglomeration of chocolate powder ingredients wherein said ingredients are agglomerated by a spray of an aqueous emulsion of cocoa fat.

Accordingly the method of the present invention comprises a first step in which an aqueous emulsion of cocoa fat is prepared. The cocoa emulsion can comprise cocoa fat only or cocoa fat and cocoa solids. In the second case, the emulsion is also a suspension of cocoa solids. In the rest of the specification the term emulsion is indifferently used for a pure emulsion or for a mixture of emulsion and suspension.

Preferably the aqueous emulsion of cocoa fat comprises between 3 and 50 % weight of cocoa fat. If the cocoa emulsion comprises cocoa fat only, the emulsion preferably comprises between 10 and 50 % weight of cocoa fat. If the cocoa emulsion comprises cocoa fat and cocoa solids, the emulsion preferably comprises about 5 % weight of cocoa fat.

Preferably the aqueous emulsion of cocoa fat is prepared in order to have a fat droplet size of at most 5 µm.

When the aqueous emulsion is prepared from cocoa fat only - without cocoa solids - droplet size can be directly measured by Malvern laser diffraction.

When the aqueous emulsion is prepared from cocoa fat and cocoa solids, the same process conditions as for the cocoa fat only lead to the same fat droplet size of the final mixture of emulsion and dispersion. Yet the analysis by Malvern laser diffraction provides a bigger average size because cocoa solids usually present a size comprised between 10 and 30 µm. Consequently when the aqueous emulsion is prepared from cocoa fat and cocoa solids, the average size measured by Malvern laser diffraction can be up to 30 µm.

The aqueous emulsion of cocoa fat can be obtained by :
- mixing melted cocoa butter and/or cocoa powder with water in the presence of an emulsifier, and
- homogenising the mixture to get an emulsion.

The emulsifier can be lecithin or milk powder.

Milk powder can be full fat milk powder, semi-skimmed milk powder, skimmed milk powder or mixtures of above powders.

Most preferably the emulsifier is lecithin, preferably soy lecithin.

Generally the emulsifier is mixed with :
- cocoa butter and/or cocoa powder, and
- water
in such a ratio that the emulsion comprises between 1 and 8 % in weight of emulsifier.

When the emulsion is prepared from cocoa butter, butter is melted to get a liquid before mixing with water. Generally cocoa butter can be heated at about 50°C.

When the emulsion is prepared from cocoa powder, said powder can be introduced within hot water directly.

Usually cocoa powder can comprise between 1 and 22 % in weight cocoa fat. Depending on the percentage of cocoa fat in the cocoa powder, cocoa powder can be mixed with cocoa butter in water to increase the cocoa fat percentage of the emulsion.

Generally cocoa butter and/or cocoa powder is/are mixed with water so that the emulsion comprises between 10 and 50 % in weight of cocoa ingredients (fat and/or powder) preferably between 13 and 28 % in weight.

According to one first preferred mode, the emulsion is prepared from :
- cocoa powder comprising at least 20 % in weight cocoa fat, and
- lecithin.

According to one second preferred mode, the emulsion is prepared from cocoa butter and lecithin. In that mode cocoa butter is the single source of cocoa, the emulsion does not contain cocoa solids. The emulsion is a pure emulsion.

Preferably melted cocoa butter and/or cocoa powder is mixed with hot water, said water presenting a temperature comprised between 40 and 55°C.

Preferably mixing is realised with a mixer enabling high shear mixing, for example a high shear at a speed higher than 7000 rpm for more than 2 min.

The mixture is then homogenised to get the emulsion of cocoa fat in water. Generally a high pressure homogenisation is implemented, preferably at a pressure of at least 150 bar. Preferably the conditions for the high shear mixing and the homogenisation are set to get a fat droplet size inferior to 5 µm for the cocoa fat in emulsion. The conditions may depend from the type of mixer and homogeniser used.

After providing the emulsion of cocoa fat, the method of preparation of the chocolate powder comprises a further step in which the aqueous emulsion of cocoa fat is sprayed in a fluid bed agglomerator. The emulsion is usually sprayed through a nozzle in the form of drops as a binder solution in the agglomerator so as to agglomerate the other powder ingredients. Preferably the emulsion is introduced in the fluid bed agglomerator at a temperature of at least 40 °C, preferably at most 60°C. In practice the emulsion can be pumped from a reservoir in which the emulsion is maintained at the requested temperature.

Simultaneously to the spraying step of the emulsion, the chocolate powder solid ingredients are fluidised by a gas to form a fluidised bed in the agglomerator.

The chocolate powder solid ingredients loaded in the fluid bed agglomerator can comprise a sweetener and/or a white component powder comprising protein.

The sweetener can be :
- a carbohydrate base sweetener selected from the group consisting of : sugars such as fructose, glucose, maltose, sucrose, lactose, dextrose, high fructose corn syrup or sugar substitutes like e.g. sorbitol, mannitol, xylitol or combinations thereof, maltodextrins, dried glucose syrups, malt extracts, starches, trehalose, raftiline, raftilose, galactose, maltose, oligosaccharides, honey powders, and mixtures of same, and/or
- a non-carbohydrate based sweetener like e.g. Splenda®, Acesulfame K®, aspartame or Stevia®, and mixtures of same.

The at least one white component powder comprising protein can be selected from the group consisting of : full fat milk powder, half skimmed powder, skimmed milk powder, whey protein isolates powder, caseinates powder or a powder rich in alternative to dairy proteins like wheat or soy and mixtures of same.

The chocolate powder solid ingredients loaded in the fluid bed agglomerator can comprise cocoa powder, especially if the emulsion of cocoa fat does not comprise cocoa powder or a low content of cocoa powder.

Optionally other powder ingredients can be added to the sweetener and/or milk powder like flavours or mouthfeel enhancers.

Preferably the emulsion and the other chocolate powder solid ingredients are introduced in the fluid bed agglomerator in such a ratio in the fluid bed agglomerator that in the final agglomerated product:
- the content of white component powder comprising protein is comprised between 0 and 50 % in weight,
- the content of sweetener is comprised between 0 and 75 % in weight,
- the content of cocoa powder and cocoa fat is comprised between 5 and 75 % in weight,
- the content of cocoa fat is comprised between 1 and 35 % in weight,
with the sum of the contents of white component powder comprising protein and sweetener being of at least 25 % in weight.

The fluid bed agglomerator is supplied with a gas that is preferably air. The operating parameters of the fluid bed agglomerator are set according to the knowledge of the man skilled in the art and usually vary from one agglomerator to another.

The flow rate of the bed depends from the nature of the fluid bed agglomerator.

The air temperature can be comprised between 60 and 120°C.

The product temperature can be comprised between 25 and 60°C.

The invention also relates to the soluble agglomerated chocolate powder obtained by the method such as described above.

Generally the soluble agglomerated chocolate powder comprises a granulometry comprised between 100 and 1500 µm. The granulometry can be measured by laser diffraction, preferably within dry dispersion.

The soluble agglomerated chocolate powder can present a dissolution time in water at 4°C of less than 75 s.

According to a second aspect the invention relates to the use of an aqueous emulsion of cocoa fat to agglomerate chocolate powder ingredients of a soluble agglomerated chocolate powder.

Actually the aqueous emulsion of cocoa fat such as described above enables the agglomeration of chocolate powder ingredients by any agglomerating technologies and with any chocolate powder ingredients.

The aqueous emulsion of cocoa fat can be used to agglomerate chocolate powder ingredients by processes like : spray drying, fluid bed agglomeration, low pressure extrusion and drying.

According to a third aspect, there is provided a method for producing an agglomerated cocoa powder, said process comprising the steps of:
- preparing an aqueous emulsion of cocoa fat,
- loading a fluid bed agglomerator with a cocoa powder,
- spraying the emulsion of cocoa fat into the fluid bed agglomerator to form agglomerates. This method uses the aqueous emulsion of cocoa fat such as described above and enables the agglomeration of cocoa powder.

The resulting agglomerated cocoa powder presents a taste different from current existing chocolate beverage powders as the latter comprise a sweetener and a white component. The powder presents an improved dissolution in cold diluent compared to the cocoa powder used as an ingredient in the fluid bed agglomerator.

Preferably in this process :
- the emulsifier of the aqueous emulsion of cocoa fat is lecithin,
- the aqueous emulsion of cocoa fat is prepared from melted cocoa butter, and
- the cocoa powder loaded in the fluid bed agglomerator is a cocoa powder comprising 1 % in weight cocoa fat.

According to a fourth aspect, there is provided a method for preparing a cold chocolate beverage comprising the dilution of:
- a chocolate beverage powder produced by the method such as described above, or
- of a cocoa powder produced by the method such as described above
with a cold aqueous diluent like water or milk.

The preparation of the cold chocolate beverage can be implemented by pouring the cold diluent in a cup comprising a dose of powder or the dilution can be implemented in a beverage dispenser.

According to one embodiment, the dose of powder can be diluted with the cold diluent in a mixing chamber, said chamber comprising a mechanical whipper preferably.

According to another embodiment, in the beverage dispenser the dose of powder can be introduced in a drinking cup and diluted by a jet of diluent introduced in the cup.

In the present invention :
- the terms "chocolate beverage powder" or "chocolate mix" mean a water soluble powder comprising agglomerates of :
   - cocoa fat and/or cocoa powder and
   - at least a white component powder comprising protein and/or a sweetener,
- the terms "cocoa fat" encompasses cocoa butter and any cocoa fat derived from cocoa beans,
- the terms ""cocoa powder" encompasses a powder comprising cocoa fat and cocoa solids, cocoa fat being embedded in cocoa solids.

The above aspects of the invention may be combined in any suitable combination. Moreover, various features herein may be combined with one or more of the above aspects to provide combinations other than those specifically illustrated and described. Further objects and advantageous features of the invention will be apparent from the claims, from the detailed description, and annexed drawings.

### Examples

In Examples 1 to 6, soluble chocolate beverage powders were prepared according to the invention, all these powders presenting the following final composition :
- 20 % in weight full fat milk,
- 50 % in weight sugar,
- 20 % in weight cocoa powder and cocoa fat,
- 10 % in weight skimmed milk powder and optionally lecithin (in Examples 2, 4, 6).

### Example 1 - Preparation of a chocolate powder according to the invention

### Step 1 - preparation of a cocoa fat emulsion starting from cocoa powder

112,5 g of skimmed milk powder is introduced in 1312,5 g of water heated at 50°C.

450 g of cocoa powder is introduced in the mixture of water and skimmed milk. Cocoa powder comprises 21 % weight cocoa fat.

The mixture is mixed with high shearing with a Silverson mixer (L5M-A mixer)) at a speed of about 10 000 rpm during 5 minutes.

Then the mixture is submitted to high pressure homogenisation at 250 bar with a Panda Plus GEA Niro Soavi two stage homogenizer. The homogenization is repeated one time.

An emulsion is obtained. The particle size distribution of this emulsion analysed by Malvern laser diffraction indicates an average size of cocoa fat droplets and cocoa particles of 30 µm. The emulsion is maintained agitated at 50°C before step 2.

### Step 2 - fluid bed agglomeration

A powder mix is prepared by mixing :
- 25 % in weight full fat milk,
- 8 % in weight skimmed milk powder,
- 61 % in weight sugar,
- 6 % in weight cocoa powder (comprising 21 % weight fat).

Air at 90°C is fed through a batch fluidised bed apparatus (Mobatch model from Heinen) with a flow rate of 120 m³/h and 2440 g of powder mix is fed to the apparatus. 1875 g of the emulsion of step 1 is fed to a spray head at the top of the apparatus at a flow rate comprised between 45 and 55 g/min in order to keep the product temperature between 30 and 40 °C

An agglomerated product is recovered from the batch.

### Example 2 - Preparation of a chocolate powder according to the invention

Example 1 was repeated except that in step 1 skimmed milk powder was replaced by 80 g of lecithin.

### Example 3 - Preparation of a chocolate powder according to the invention

### Step 1 - preparation of a cocoa fat emulsion starting from cocoa butter and cocoa powder

132,1 g of skimmed milk powder is introduced in 1497,5 g of water heated at 50°C.

132,1 g of cocoa butter is melted at 50°C and introduced in the mixture of water and skimmed milk.

Then 468,3 g of cocoa powder is introduced in the mixture. Cocoa powder comprises 1 % weight cocoa fat.

The mixture is mixed with high shearing with a Silverson mixer at a speed of 10000 rpm during 5 minutes.

Then the mixture is submitted to high pressure homogenisation with a Panda Plus GEA Niro Soavi two stage homogenizer. The homogenization is repeated one time.

An emulsion is obtained. The particle size distribution of this emulsion analysed by Malvern laser diffraction indicates an average size of cocoa fat droplets and cocoa particles of 30 µm.

The emulsion is maintained agitated at 50°C before step 2.

### Step 2 - fluid bed agglomeration

A powder mix is prepared by mixing :
- 26,5 % in weight full fat milk,
- 7,4 % in weight skimmed milk powder,
- 66,1 % in weight sugar.

Air at 90°C is fed through a batch fluidised bed apparatus (Mobatch model from Heinen) with a flow rate of 120 m³/h and 2268 g of powder mix is fed to the apparatus. 2230 g of the emulsion of step 1 is fed to a spray head at the top of the apparatus at a flow rate comprised between 45 and 55 g/min in order to keep the product temperature between 30 and 40°C.

An agglomerated product is recovered from the batch.

### Example 4 - Preparation of a chocolate powder according to the invention

Example 3 was repeated except that in step 1 skimmed milk powder was replaced by 33 g of lecithin.

### Example 5 - Preparation of a chocolate powder according to the invention

### Step 1 - preparation of a cocoa fat emulsion starting from cocoa butter

132 g of cocoa butter is melted at a temperature greater than 23°C and 198 g of skimmed milk powder is added to melted butter. The mixture is introduced in 613 g of water heated at 50°C.

The mixture is mixed with high shearing with a Silverson mixer at a speed of 10000 rpm during 5 minutes.

Then the mixture is submitted to high pressure homogenisation with a Panda Plus GEA Niro Soavi two stage homogenizer. The homogenization is repeated one time.

An emulsion is obtained. The particle size distribution of this emulsion analysed by Malvern laser diffraction indicates an average size of cocoa butter droplets inferior to 5 µm.

The emulsion is maintained agitated at 50°C before step 2.

### Step 2 - fluid bed agglomeration

A powder mix is prepared by mixing :
- 22,5 % in weight full fat milk,
- 4 % in weight skimmed milk powder,
- 56 % in weight sugar.
- 17,5 % in weight cocoa powder (with 1% fat).

Air at 90°C is fed through a batch fluidised bed apparatus (Mobatch model from Heinen) with a flow rate of 120 m³/h and 2670 g of powder mix is fed to the apparatus. 943g of the emulsion of step 1 is fed to a spray head at the top of the apparatus at a flow rate comprised between 45 and 55 g/min in order to keep the product temperature between 30 and 40°C.

An agglomerated product is recovered from the batch.

### Example 6 - Preparation of a chocolate powder according to the invention

Example 5 was repeated except that in step 1 skimmed milk powder was replaced by 33 g of lecithin.

### Example 7 - Properties of powders of examples 1 to 6

The dissolution of the powders of Examples 1 to 6 was evaluated by measuring the reconstitution time t₉₀ necessary to get 90 % solids of the initial amount of powder dissolved in water at 4°C. The reconstitution was made by introducing 10 g of powder in 400 ml of water at 4°C in a receptacle and agitating the beverage with a magnetic stirrer at the bottom of a receptacle of 600 ml at 500 rpm and with an agitator at the overhead of the beverage at 100 rpm.

The reconstitution time t₉₀ has been calculated from the measurement of the conductivity of the reconstituted beverage, the conductivity measurement starting from the moment at which the powder is dispensed in water at 4°C.

The results for powders of Examples 1 to 6 are listed in the following table :

| Example | t₉₀ (s) |
|---|---|
| 1 | 56 |
| 2 | 21 |
| 3 | 125 |
| 4 | 71 |
| 5 | 73 |
| 6 | 28 |

By comparison a beverage chocolate powder was prepared by agglomerating a cocoa powder, sugar and full fat milk by a spray of water in the same fluid bed agglomerator used in Examples 1 to 6. The nature and the proportions of the different ingredients were identical to the ones of the cocoa powder prepared in Example 1. The single difference related to the agglomeration of powder ingredients by a spray of water (in place of the spray of the emulsion of cocoa fat according to the invention). The resulting powder presented a reconstitution time t₉₀ of 77 s, that is a much higher time than the powder of Example 1 (56 s).

The flowability of the powders of Examples 1 to 6 was comprised between 5 and 15 according to the Carr index.

Visually, the powders of Examples 1 to 6 presented a homogeneous dark brown colour with few fines (the content of fines was inferior to 10 % in weight measured by sieving with a sieve presenting a 100 µm opening). This aspect is the same for all the chocolate beverage powders prepared by the process of the present invention, whatever the type of aqueous emulsion of cocoa fat used, and is very appealing for the consumers compared to existing beverage chocolate powders prepared by fluid bed agglomeration with water spray. The latter ones present an inhomogeneous aspect and a lighter colour.

Although the invention has been described with reference to the above illustrated embodiments, it will be appreciated that the invention as claimed is not limited in any way by these illustrated embodiments.

Variations and modifications may be made without departing from the scope of the invention as defined in the claims. Furthermore, where known equivalents exist to specific features, such equivalents are incorporated as if specifically referred in this specification.

As used in this specification, the words "comprises", "comprising", and similar words, are not to be interpreted in an exclusive or exhaustive sense. In other words, they are intended to mean "including, but not limited to".

## Claims

1. A method for producing a soluble agglomerated chocolate powder, said powder comprising cocoa fat and chocolate powder ingredients including at least a sweetener and/or a white component powder comprising protein, said process comprising the steps of:
- providing an aqueous emulsion of cocoa fat,
- loading a fluid bed agglomerator with chocolate powder solid ingredients,
- spraying the emulsion of cocoa fat into the fluid bed agglomerator to form agglomerates.

2. A method according to Claim 1 wherein the aqueous emulsion of cocoa fat is prepared in order to have a fat droplet size inferior to 5 µm.

3. A method according to Claim 1 or 2 wherein the aqueous emulsion of cocoa fat comprises cocoa solids.

4. A method according to any one of the precedent claims, wherein the aqueous emulsion of cocoa fat comprises between 3 and 50 % weight of cocoa fat.

5. A method according to any one of the precedent claims, wherein the aqueous emulsion of cocoa fat is obtained by :
- mixing melted cocoa fat and/or cocoa powder with water in the presence of an emulsifier, and
- homogenising the mixture to get an emulsion.

6. A method according to Claim 5 wherein the emulsifier is lecithin or milk powder.

7. A method according to Claim 5 or 6 wherein the emulsifier is mixed with cocoa fat and/or cocoa powder and with water in such a ratio that the emulsion comprises between 1 and 8 % in weight of emulsifier.

8. A method according to any one of Claims 5 to 7 wherein cocoa fat or and/or cocoa powder is/are mixed with water so that the emulsion comprises between 10 and 50 % in weight of cocoa ingredients (fat and/or powder).

9. A method according to any one of the precedent claims wherein the aqueous emulsion of cocoa fat is introduced in the fluid bed agglomerator at a temperature of at least 40 °C, preferably at most 60°C.

10. A method according to any one of the precedent claims wherein the chocolate powder solid ingredients loaded in the fluid bed agglomerator comprise a sweetener and/or a white component powder comprising protein, wherein :
- the sweetener is :
- a carbohydrate base sweetener selected from the group consisting of : sugars such as fructose, glucose, maltose, sucrose, lactose, dextrose, high fructose corn syrup or sugar substitutes like e.g. sorbitol, mannitol, xylitol or combinations thereof, maltodextrins, dried glucose syrups, malt extracts, starches, trehalose, raftiline, raftilose, galactose, maltose, oligosaccharides, honey powders, and mixtures of same, and/or
- a non-carbohydrate based sweetener,
- white component powder comprising protein is selected from the group consisting of : full fat milk powder, half skimmed powder, skimmed milk powder, whey protein isolates powder, caseinates powder or a powder rich in alternative to dairy proteins like wheat or soy and mixtures of same.

11. A method according to any one of the precedent claims wherein the chocolate powder solid ingredients loaded in the fluid bed agglomerator comprise a cocoa powder.

12. A method according to any one of the precedent claims wherein the emulsion and the other chocolate powder solid ingredients are introduced in the fluid bed agglomerator in such a ratio that in the final agglomerated product:
- the content of white component powder comprising protein is comprised between 0 and 50 % in weight,
- the content of sweetener is comprised between 0 and 75 % in weight,
- the content of cocoa powder and cocoa fat is comprised between 5 and 75 % in weight,
- the content of cocoa fat is comprised between 1 and 35 % in weight,
with the sum of the contents of white component powder comprising protein and sweetener being of at least 25 % in weight.

13. Use of an aqueous emulsion of cocoa fat to agglomerate chocolate powder ingredients of a soluble agglomerated chocolate powder.

14. Use according to the precedent claim, wherein the chocolate powder ingredients are agglomerated by spray drying, fluid bed agglomeration, low pressure extrusion and drying.

15. A method for producing an agglomerated cocoa powder, said process comprising the steps of :
- preparing an aqueous emulsion of cocoa fat,
- loading a fluid bed agglomerator with a cocoa powder,
- spraying the emulsion of cocoa fat into the fluid bed agglomerator to form agglomerates.

16. A method for preparing a cold chocolate beverage comprising the dilution of :
- a chocolate beverage powder produced by the method according to any one of claims 1 to 13, or
- of a cocoa powder produced by the method according to Claim 15
with a cold aqueous diluent like water or milk.

## Patentansprüche

1. Verfahren zum Herstellen eines löslichen agglomerierten Schokoladenpulvers, wobei das Pulver Kakaofett und Schokoladenpulverbestandteile umfasst, die mindestens ein Süßungsmittel und/oder ein Protein enthaltendes Weißkomponentenpulver umfassen, wobei das Verfahren die folgenden Schritte umfasst:
- Bereitstellen einer wässrigen Kakaofettemulsion,
- Beladen eines Fließbettagglomerators mit festen Schokoladenpulverbestandteilen,
- Sprühen der Kakaofettemulsion in den Fließbettagglomerator, um Agglomerate zu bilden.

2. Verfahren nach Anspruch 1, wobei die wässrige Kakaofettemulsion hergestellt wird, um eine Fetttröpfchengröße von weniger als 5 µm zu erhalten.

3. Verfahren nach Anspruch 1 oder 2, wobei die wässrige Kakaofettemulsion Kakaofeststoffe umfasst.

4. Verfahren nach einem der vorstehenden Ansprüche, wobei die wässrige Kakaofettemulsion zu 3 bis 50 Gew.-% Kakaofett umfasst.

5. Verfahren nach einem der vorstehenden Ansprüche, wobei die wässrige Kakaofettemulsion erhalten wird durch:
- Mischen von geschmolzenem Kakaofett und/oder Kakaopulver mit Wasser in Gegenwart eines Emulgators und
- Homogenisieren der Mischung, um eine Emulsion zu erhalten.

6. Verfahren nach Anspruch 5, wobei der Emulgator Lecithin oder Milchpulver ist.

7. Verfahren nach Anspruch 5 oder 6, wobei der Emulgator in einem solchen Verhältnis mit Kakaofett und/oder Kakaopulver und mit Wasser gemischt wird, dass die Emulsion zu 1 bis 8 Gew.-% Emulgator umfasst.

8. Verfahren nach einem der Ansprüche 5 bis 7, wobei Kakaofett und/oder Kakaopulver mit Wasser gemischt wird/werden, so dass die Emulsion zu 10 bis 50 Gew.-% Kakaobestandteile (Fett und/oder Pulver) umfasst.

9. Verfahren nach einem der vorstehenden Ansprüche, wobei die wässrige Kakaofettemulsion bei einer Temperatur von mindestens 40 °C, vorzugsweise höchstens 60 °C, in den Fließbettagglomerator gegeben wird.

10. Verfahren nach einem der vorstehenden Ansprüche, wobei die festen Schokoladenpulverbestandteile, die in den Fließbettagglomerator geladen werden, ein Süßungsmittel und/oder ein Protein enthaltendes Weißkomponentenpulver umfassen, wobei:
- das Süßungsmittel Folgendes ist:
- ein Süßungsmittel auf Kohlenhydratbasis, ausgewählt aus der Gruppe, bestehend aus: Zuckern wie Fructose, Glucose, Maltose, Saccharose, Lactose, Dextrose, Maissirup mit hohem Fructosegehalt oder Zuckerersatzstoffen wie z. B. Sorbit, Mannit, Xylit oder Kombinationen davon, Maltodextrinen, getrockneten Glucosesirupen, Malzextrakten, Stärken, Trehalose, Raftilin, Raftilose, Galactose, Maltose, Oligosacchariden, Honigpulvern und Mischungen davon, und/oder
- ein Süßungsmittel auf Nicht-Kohlenhydratbasis,
- Protein umfassendes Weißkomponentenpulver ausgewählt ist aus der Gruppe, bestehend aus: Vollmilchpulver, halb entrahmtem Pulver, entrahmtem Milchpulver, Molkeproteinisolatpulver, Kaseinatpulver oder ein Pulver reich an einer Alternative zu Milcheiweiß wie Weizen oder Soja und Mischungen davon.

11. Verfahren nach einem der vorstehenden Ansprüche, wobei die festen Schokoladenpulverbestandteile, die in den Fließbettagglomerator geladen werden, ein Kakaopulver umfassen.

12. Verfahren nach einem der vorstehenden Ansprüche, wobei die Emulsion und die anderen festen Schokoladenpulverbestandteile in einem solchen Verhältnis in den Fließbettagglomerator gegeben werden, dass in dem endgültigen agglomerierten Produkt:
- der Gehalt an Protein umfassendem Weißkomponentenpulver 0 bis 50 Gew.-% beträgt,
- der Gehalt an Süßungsmittel 0 bis 75 Gew.-% beträgt,
- der Gehalt an Kakaopulver und Kakaofett 5 bis 75 Gew.-% beträgt,
- der Gehalt an Kakaofett 1 bis 35 Gew.-% beträgt,
wobei die Summe des Gehalts an Protein umfassendem Weißkomponentenpulver und an Süßungsmittel mindestens 25 Gew.-% beträgt.

13. Verwendung einer wässrigen Kakaofettemulsion zum Agglomerieren von Schokoladenpulverbestandteilen eines löslichen agglomerierten Schokoladenpulvers.

14. Verwendung nach vorstehendem Anspruch, wobei die Schokoladenpulverbestandteile durch Sprühtrocknen, Fließbettagglomeration, Niederdruckextrusion und Trocknen agglomeriert werden.

15. Verfahren zum Herstellen eines agglomerierten Kakaopulvers, wobei das Verfahren die folgenden Schritte umfasst:
- Herstellen einer wässrigen Kakaofettemulsion,
- Beladen eines Fließbettagglomerators mit einem Kakaopulver,
- Sprühen der Kakaofettemulsion in den Fließbettagglomerator, um Agglomerate zu bilden.

16. Verfahren zum Herstellen eines kalten Schokoladengetränks, umfassend das Verdünnen:
- eines Schokoladengetränkepulvers, hergestellt durch das Verfahren nach einem der Ansprüche 1 bis 13, oder
- eines Kakaopulvers, hergestellt durch das Verfahren nach Anspruch 15, mit einem kalten wässrigen Verdünnungsmittel wie Wasser oder Milch.

## Revendications

1. Procédé de production d'une poudre de chocolat agglomérée soluble, ladite poudre comprenant des ingrédients de graisse de cacao et de poudre de chocolat incluant au moins un édulcorant et/ou une poudre de composant blanc comprenant une protéine, ledit procédé comprenant les étapes consistant à :
- fournir une émulsion aqueuse de graisse de cacao,
- charger un agglomérateur à lit fluidisé avec des ingrédients solides de poudre de chocolat,
- pulvériser l'émulsion de graisse de cacao dans l'agglomérateur à lit fluidisé pour former des agglomérats.

2. Procédé selon la revendication 1, dans lequel l'émulsion aqueuse de graisse de cacao est préparée pour avoir une taille de gouttelette de graisse inférieure à 5 µm.

3. Procédé selon la revendication 1 ou 2 dans lequel l'émulsion aqueuse de beurre de cacao comprend des solides de cacao.

4. Procédé selon l'une quelconque des revendications précédentes, dans lequel l'émulsion aqueuse de graisse de cacao comprend entre 3 et 50 % en poids de graisse de cacao.

5. Procédé selon l'une quelconque des revendications précédentes, dans lequel l'émulsion aqueuse de graisse de cacao est obtenue par :
- mélange de graisse de cacao fondue et/ou de poudre de cacao avec de l'eau en présence d'un émulsifiant, et
- homogénéisation du mélange pour obtenir une émulsion.

6. Procédé selon la revendication 5, dans lequel l'émulsifiant est de la lécithine ou de la poudre de lait.

7. Procédé selon la revendication 5 ou 6, dans lequel l'émulsifiant est mélangé à de la graisse de cacao et/ou de la poudre de cacao et à de l'eau dans un rapport tel que l'émulsion comprend entre 1 et 8 % en poids d'émulsifiant.

8. Procédé selon l'une quelconque des revendications 5 à 7 dans lequel de la graisse de cacao et/ou de la poudre de cacao est/sont mélangée(s) avec de l'eau de sorte que l'émulsion comprend entre 10 et 50 % en poids d'ingrédients de cacao (graisse et/ou poudre).

9. Procédé selon l'une quelconque des revendications précédentes, dans lequel l'émulsion aqueuse de graisse de cacao est introduite dans l'agglomérateur à lit fluidisé à une température d'au moins 40 °C, de préférence d'au plus 60 °C.

10. Procédé selon l'une quelconque des revendications précédentes, dans lequel les ingrédients solides de poudre de chocolat chargés dans l'agglomérateur à lit fluidisé comprennent un édulcorant et/ou une poudre de composant blanc comprenant une protéine, dans lequel :
- l'édulcorant est :
- un édulcorant à base de glucide choisi dans le groupe constitué de : sucres tels que fructose, glucose, maltose, saccharose, lactose, dextrose, sirop de maïs à haute teneur en fructose ou succédanés de sucre tels que p. ex. sorbitol, mannitol, xylitol ou leurs combinaisons, maltodextrines, sirops de glucose séchés, extraits de malt, amidons, tréhalose, raftiline, raftilose, galactose, maltose, oligosaccharides, poudres de miel, et des mélanges de ceux-ci, et/ou
- un édulcorant non à base de glucide,
- la poudre de composant blanc comprenant une protéine est choisie dans le groupe constitué par : poudre de lait entier, poudre semi-écrémée, poudre de lait écrémé, poudre d'isolats de protéines de lactosérum, poudre de caséinates ou une poudre riche en alternative aux protéines laitières telle que blé ou soja et des mélanges de celles-ci.

11. Procédé selon l'une quelconque des revendications précédentes dans lequel les ingrédients solides de poudre de chocolat chargés dans l'agglomérateur à lit fluidisé comprennent une poudre de cacao.

12. Procédé selon l'une quelconque des revendications précédentes, dans lequel l'émulsion et les autres ingrédients solides de poudre de chocolat sont introduits dans l'agglomérateur à lit fluidisé dans un rapport tel que dans le produit aggloméré final :
- la teneur en poudre de composant blanc comprenant une protéine est comprise entre 0 et 50 % en poids,
- la teneur en édulcorant est comprise entre 0 et 75 % en poids,
- la teneur en poudre de cacao et graisse de cacao est comprise entre 5 et 75 % en poids,
- la teneur en graisse de cacao est comprise entre 1 et 35 % en poids,
avec la somme des teneurs en poudre de composant blanc comprenant la protéine et l'édulcorant étant d'au moins 25 % en poids.

13. Utilisation d'une émulsion aqueuse de graisse de cacao pour agglomérer des ingrédients de poudre de chocolat d'une poudre de chocolat agglomérée soluble.

14. Utilisation selon la revendication précédente, dans laquelle les ingrédients de poudre de chocolat sont agglomérés par séchage par pulvérisation, agglomération en lit fluidisé, extrusion à basse pression et séchage.

15. Procédé de production d'une poudre de cacao agglomérée, ledit procédé comprenant les étapes de :
- préparation d'une émulsion aqueuse de graisse de cacao,
- chargement d'un agglomérateur à lit fluidisé avec une poudre de cacao,
- pulvérisation de l'émulsion de graisse de cacao dans l'agglomérateur à lit fluidisé pour former des agglomérats.

16. Procédé de préparation d'une boisson chocolatée froide comprenant la dilution de :
- une poudre de boisson chocolatée produite par le procédé selon l'une quelconque des revendications 1 à 13, ou
- une poudre de cacao produite par le procédé selon la revendication 15 avec un diluant aqueux froid comme de l'eau ou du lait.
